# EUROPEAN PATENT APPLICATION

(11) **EP 2 381 236 A1**
(43) Date of publication of application: **26.10.2011**
(21) Application number: 10160903.0
(22) Date of filing: 23.04.2010
(51) Int. Cl.: G01N 1/42

(54) **Apparatus for preparing a cryogenic TEM specimen**

(71) Applicant: FEI COMPANY, Hillsboro, Oregon 97124-5793 (US); Maastricht Instruments B.V., 6229 ER Maastricht (NL)
(72) Inventor: Smulders, Karin, 5706 KS, Helmond (NL); Wagner, Raymond, 4207 BH, Gorinchem (NL); Van de Water, Jeroen, 5694 WS, Breugel (NL); Luecken, Uwe, 5627DG, Eindhoven (NL); Nijpels, Frank, 6219 BD, Maastricht (NL); Storms, Marc, 5422 CB, Gemert (NL)
(74) Representative: Bakker, Hendrik

(57) **Abstract**

Apparatus (100) for preparing a cryogenic TEM specimen on a specimen carrier (102), the apparatus comprising a plunger (105), blotters (106^{a}, 106^{b}), a container (108) for holding a cryogenic liquid (110), the plunger moving the specimen carrier to an applicator position for applying a liquid, blotting the specimen carrier, and plunging the specimen carrier in the cryogenic liquid. The apparatus is characterized in that it shows a first acceptor (114) for holding a first storage capsule (112) equipped to store one or more specimen carriers (126-i), the plunger is equipped with a gripper (104) for gripping the specimen carrier; a second acceptor (118) for holding a second storage capsule (116) at a cryogenic temperature to store one or more specimen carriers (128-i) at a cryogenic temperature; and the apparatus is equipped to move the specimen carrier automatically from the first storage capsule via the applicator position and the blotting position to the second storage capsule.

## Description

The invention relates to an apparatus for preparing a cryogenic TEM specimen on a specimen carrier, the apparatus comprising:
- a plunger for moving the specimen carrier,
- a blotter for blotting the specimen,
- a container for holding a cryogenic liquid,
the apparatus equipped to move the specimen to an applicator position where a solution is applied to the specimen, the apparatus equipped to move the specimen to a blotting position that may or may not differ from the applicator position where the specimen is blotted, and the apparatus equipped to plunge the specimen in the cryogenic liquid.

The invention further relates to a method of using such an apparatus.

Such an apparatus is known from European Patent No. EP1370846.

In a Transmission Electron Microscope (TEM) a specimen is inspected using an electron beam. A TEM comprises an electron source generating a beam of electrons, typically with an energy of, for example, between 60 and 300 keV. Deflectors and lenses then manipulate the beam so that it irradiates the specimen. The specimen is typically a thin specimen of e.g. a biological material, or a semiconductor material with a thickness sufficiently small that it shows transparency to the electrons. To that end thicknesses between, for example, 30 nm (for samples comprising many high-Z atoms, such as semiconductor material or metallic samples) and 200 nm (for biological samples) are routinely used, although samples as thick as, for example, 1 µm may be used.

The beam, while passing through the sample, interacts with the sample. Some electrons pass through the sample unhindered, some electrons are diffracted, some electrons lose energy and some electrons are absorbed.

The electrons passing through the sample are then used to form, for example, an enlarged image on a sensor, such as a fluorescent screen. The fluorescent screen may be part of a camera system using a CCD sensor or a CMOS sensor. However, it is also known to form the image directly on a CMOS or CCD sensor. Such sensors are typically capable to image 4000x4000 pixels. Also other methods of gaining information are known, such as forming an Electron Energy Loss Spectrum of the specimen, or a diffractogram giving crystallographic information.

When inspecting a biological specimen, damage occurs during inspection. This damage is partly caused by localized heating and partly by damaging the chemical bonds in the specimen. The effects of this damage are much smaller at cryogenic temperatures than at room temperature. Therefore, biological specimens are preferably inspected in a cryo-TEM, where a specimen can be observed at cryogenic temperatures. Cryogenic is in this context a temperature below the vitrification temperature of ice where amorphous ice is stable, a temperature of about 136 K. The need for this temperature is that otherwise the formation of ice crystals will damage the biological cells or tissues.
It is noted that cryo-microscopes operating at a specimen temperature of liquid nitrogen or even liquid helium are commercially available.
To avoid damage to the specimen prior to inspection, crystallization of ice in the biological cells or tissue must also be avoided. This is realized by freezing the specimen extremely fast to a temperature of below e.g. 136 K, so that vitrified ice (also named amorphous ice) forms instead of crystalline ice.

The known patent describes an apparatus for plunging a specimen mounted on a grid in a carrier of liquid ethane. The grid is typically a standard TEM grid, that is: a fragile copper grid with a diameter of approximately 3,05 mm and 30 µm thickness, but may be of different make (constitution, dimensions). Typically a specimen, such as a number of cells or parts thereof, drugs like Doxorubicin liposomal (also known as Doxil^{®}), viruses such as Tobacco Mosaic Virus, or proteins such as Keyhole Limpet Hemocyanin, etc, is applied to the grid by bringing the cells or parts thereof in an aqueous solution and then putting a drop of the solution on the grid. The operator preparing the specimen, such as a laboratory worker, then picks up the grid with a pair of tweezers, seeing to it that the grid (typically a 3 mm diameter copper gauze with a thickness of 30 µm) is not deformed. The pair of tweezers is then attached to an axle of the apparatus, the plunger. A blotter blots most of the solution from the grid, leaving a thin layer of aqueous fluid with the specimen immersed in it. The grid is then plunged into a cryogenic liquid, such as liquid ethane, as a result of which the specimen is frozen with sufficient speed to form a vitrified sample. From that moment on until after the inspection in the TEM the specimen must be kept at a temperature below the vitrification temperature of approximately 136 K, as a higher temperature may lead to the formation of ice crystals due to a phase change in the ice.
It is noted that the solution may also be brought onto the specimen grid when the grid is already clamped by the pair of tweezers.
To be observed in a TEM, the specimen carrier must be mounted in a so-named cryo-carrier of a cryo-TEM. This implies placing the specimen carrier, often a fragile copper grid with a diameter of 3 mm and a thickness of approximately 30 µm, in a chamber of the cryo-carrier and securing it with a small clip, all at a temperature of below the vitrification temperature. Then, the cryo-carrier must be inserted in the cryo-TEM, which must be done in a protective atmosphere (or vacuum) to avoid the formation of hoarfrost on the cryo-carrier while transporting it between the specimen preparation apparatus of the known patent and the cryo-TEM.

A large improvement already occurs when the specimen carriers are placed and transported in protective capsules. However, detaching the pair of tweezers from the plunger, and placing the specimen carrier in a capsule while keeping the specimen carrier in the cryogenic area of the apparatus is cumbersome work and often leads to crystallized specimens and/or deformed grids.
Thus, this results in a process that is rather time consuming, to be performed by well-trained laboratory personnel only.

The aim of the invention is to provide an apparatus suited for batch processing, showing a higher success rate for specimen preparation than the known apparatus, and that can be performed by less trained personnel.

To that end the apparatus according to the invention is characterized in that the apparatus shows a first acceptor for holding a first storage capsule, the first acceptor having orientation marks that can cooperate with orientation marks on the first storage capsule to hold the first storage capsule in a known position, the first storage capsule equipped to store one or more specimen carriers; the gripper is equipped to hold the specimen carrier; the apparatus shows a second acceptor for holding a second storage capsule at a cryogenic temperature, the second acceptor having orientation marks that can cooperate with orientation marks on the second storage capsule to hold the second storage capsule in a known position, the second capsule equipped to store one or more specimen carriers at a cryogenic temperature; and the apparatus is equipped to move the specimen carrier from the first storage capsule with the gripper, the apparatus is equipped to move the specimen carrier to an applicator position for applying a specimen in an aqueous suspension to the specimen carrier, the apparatus is equipped to move the specimen carrier to a blotting position where the specimen carrier is blotted, in which the blotting position may or may not differ from the applicator position, and the apparatus is equipped to place the specimen carrier in the second storage capsule.

Inventors found that by equipping the plunger with a gripper that can handle the grid itself and eventually place the grid in the second (cryogenic) storage capsule, thus eliminating the steps of decoupling the pair of tweezers (which act as gripper in the known apparatus) and the subsequent manual placing of the grid in the cryogenic capsule, the success rate for specimen preparation was drastically improved. Not only is the cumbersome step of decoupling the pair of tweezers from the plunger removed, but also the risk that, during manipulation, the specimen temporarily enters a region that is insufficiently cooled, resulting in unwanted heating and thus crystallization of the specimen. Also, a further automation of the specimen preparation process is realized, enabling batch processing and leading to considerable saving in throughput time.

In an embodiment of the apparatus according to the invention the apparatus comprises an applicator for applying a liquid to the specimen carrier.
As the apparatus is capable to automatically move the specimen carrier from the first capsule to the second capsule and the automatic application of the specimen on the specimen carrier results in an apparatus that is capable of automated batch processing.

In another embodiment of the apparatus according to the invention the second acceptor is placed in a cryogenic liquid, which cryogenic liquid may or may not be the cryogenic liquid in which the specimen carrier is plunged.
The second storage capsule must be kept at a cryogenic temperature until it is removed from the apparatus for further processing, e.g. in a cryo-TEM. The most convenient way is to keep the specimen carriers submerged in a cryogenic liquid, such as liquid ethane or liquid nitrogen.

In yet another embodiment of the apparatus according to the invention the gripper is equipped to grip a standard TEM grid with a thickness of between 15 µm and 50 µm, the TEM grid used as specimen carrier.
Handling standard grids that, as known to the skilled person, are also used in a standard cryo-TEM makes the apparatus suited for routine use. However, also handling of other specimen carriers, such as reinforced grids as described in US patent No. US7,034,316 and grids suited for more automated handling as described in EP application No. 07108896 is foreseen.

In yet another embodiment of the apparatus according to the invention the apparatus is equipped with means to detect the position of specimen carriers in the first storage capsule.
The grids (specimen carriers) are very delicate, due to their thickness of, for example, 30 µm. To enable gripping the specimen carrier without damaging it (by bending, etc.) visual detection of its position in the capsule may be needed.

In a further embodiment of the apparatus according to the invention the means to detect the position of specimen carriers are used to position the gripper with respect to a specimen carrier in the first storage capsule so that the specimen carrier is gripped by the gripper.
By using position detection the gripper can be moved to the correct position with respect to the specimen carrier before gripping it.

In an aspect of the invention a method of preparing a vitrified specimen comprising the steps of:
A. supplying a specimen carrier in a first storage capsule,
B. removing the specimen carrier from the first storage capsule with a gripper,
C. moving the specimen carrier to an applicator position,
D. applying a solution to the specimen carrier
E. moving the specimen carrier to the blotting position
F. blotting the specimen carrier with one or more blotters,
G. plunging the specimen carrier in a cryogenic liquid,
H. placing the specimen carrier in a second storage capsule at cryogenic temperature,
**is characterized in that**
steps B. to H. are performed by an apparatus equipped with a first acceptor for holding the first storage capsule and a second acceptor for holding the second storage capsule, and the apparatus comprises a controller for controlling the movement of the gripper, the gripper used for gripping the specimen carrier and moving the specimen carrier in steps B. to H.

As mentioned before this highly automated handling eliminates errors leading to crystallization of the specimen.

In an embodiment of the method according to the invention detection means determine the position of the specimen carrier in the first storage capsule during step B.
Such detection means may, for example, comprise a camera.

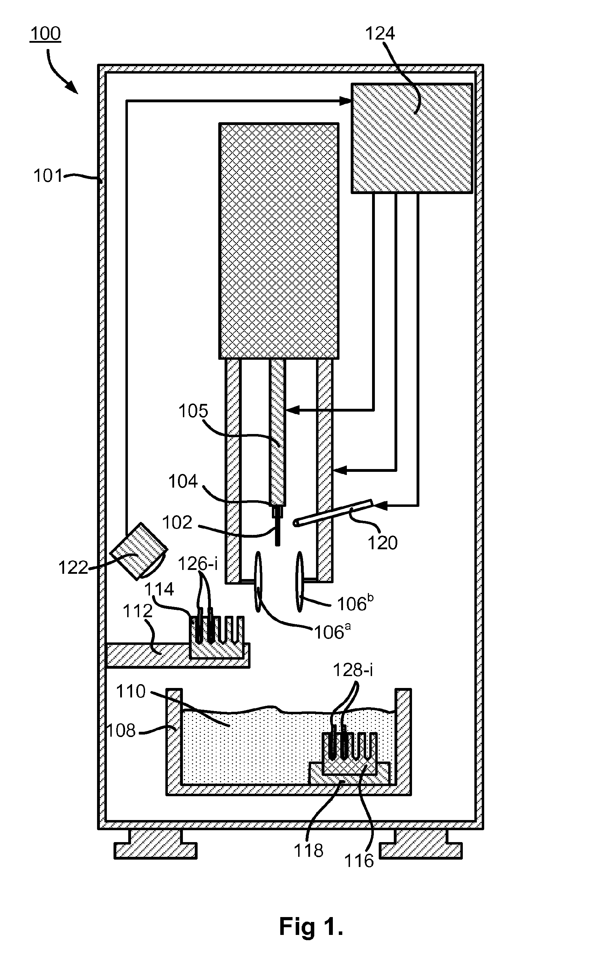

The invention is now elucidated using figures, in which corresponding reference numerals indicate corresponding parts.
To that end figure 1 schematically shows an apparatus according to the invention.
The apparatus 100 comprises a housing 101, in which a gripper 104 is placed on the distal end of a plunger 105. The gripper is equipped to grip a specimen carrier 102. A supply of specimen carriers 126-i is available in a first storage capsule 114, that is placed in a known position in a first acceptor 112. The apparatus further comprises an applicator 120 with which a specimen can be applied, for example by applying a aqueous solution of cells. Two blotter pads 106^{a}, 106^{b} can blot the specimen carrier to remove part of the water, thus leaving a solution with specimen material (e.g. cells) on the specimen carrier.
It is noted that blotting can be performed with only one blotting pad. The plunger 105 then plunges the specimen carrier in a cryogenic liquid 110, contained in cryogenic container 108. Hereby the specimen is frozen very rapidly (with rate of temperature changes in the order of 10⁵ K/s), resulting in a vitrified sample. The specimen carrier is then placed in a second storage capsule 116, placed in a second acceptor 118. In the second storage capsule other, already processed, specimen carriers 128-i may be present.
To position the gripper with respect to the fragile specimen carriers a camera 122 is used, which feeds its image to a controller 124. The controller controls the working of the apparatus, including movement/gripping action of the gripper, the movement of the plunger with respect to the other parts, etc.

The first storage capsule contains a supply of specimen carriers, such as grids. These specimen carriers may be bare, or they may already carry a specimen. The cycle starts with the controller positioning the gripper with respect to one of the specimen carriers to such a position that the gripper can grip the specimen carrier. The positioning may include movement of the gripper by the plunger and/or movement of the first acceptor, and it may involve detection of the position of the specimen carriers with e.g. a camera. After gripping a specimen carrier, the specimen carrier is moved to a position where a specimen, such as an aqueous solution, can be applied. The solution may comprise cells or parts of cells, drugs like Doxorubicin liposomal (also known as Doxil^{®}), viruses such as Tobacco Mosaic Virus, proteins such as Keyhole Limpet Hemocyanin, etc, but also other solutions may be used.
Application of the specimen can be done by the operator, but may also be performed by the apparatus, by applying a droplet of liquid to the specimen carrier from one or more applicators 120.
It is noted that the solution may comprise one type of specimens, but that a mix of several specimens is allowed. This enables the observation of e.g. chemical or biological reaction that are literally frozen in time.
The specimen thus formed on the specimen carrier is not fit for freezing, as it often contains too much liquid. Therefore the specimen carrier is blotted with one or two blotters. The blotters comprise blotting paper, or a supply of blotting paper that is automatically refreshed. The blotter or blotters are moved to such a position that they just touch the specimen, and the liquid is absorbed. Thus a thin layer of an aqueous solution is formed.
The specimen carrier with the specimen is now plunged into the cryogenic fluid very rapidly. The cooling rate is preferably in excess of 10⁵ K/s, which is sufficiently fast to immobilize the water molecules before crystal growth occurs. The thus formed specimen is then placed in a second storage capsule, that is kept at cryogenic temperature. This capsule may be kept submerged in a cryogenic liquid, or in a cryogenic environment. The second storage capsule can be made ready for transport and be taken out of the apparatus, for further processing (e.g. inspection in a TEM). The making ready for transport may include taking the capsule out of the liquid and putting a hermetic seal or cover over it, thereby encapsulating the one or more specimen carriers. Hereby formation of hoarfrost on the specimen is avoided.
It is noted that the apparatus may incorporate other parts, such as a humidifier for keeping the environment of the applicator humid, temperature control near the applicator position, etc.
It is also noted that the specimen may be stained, preferably in the applicator position, resulting in a better visibility of certain features in the specimen, for example the position of lipid double layers

## Claims

1. Apparatus (100) for preparing a cryogenic specimen on a specimen carrier(102), the apparatus comprising:
• a plunger (105) for moving the specimen carrier,
• one or more blotters (106^{a}, 106^{b}) for blotting the specimen carrier,
• a container (108) for holding a cryogenic liquid (110),
the apparatus equipped to move the specimen carrier to an applicator position where a liquid is applied to the specimen carrier, the apparatus is equipped to move the specimen carrier to a blotting position that may or may not differ from the applicator position where the specimen carrier is blotted, and plunge the specimen carrier in the cryogenic liquid,
**characterized in that**
• the apparatus shows a first acceptor (114) for holding a first storage capsule (112), the first acceptor having orientation marks that can cooperate with orientation marks on the first storage capsule to hold the first storage capsule in a known position, the first storage capsule equipped to store one or more specimen carriers (126-i),
• the plunger is equipped with a gripper (104) for gripping the specimen carrier;
• the apparatus shows a second acceptor (118) for holding a second storage capsule (116) at a cryogenic temperature, the second acceptor having orientation marks that can cooperate with orientation marks on the second storage capsule to hold the second storage capsule in a known position, the second capsule equipped to store one or more specimen carriers (128-i) at a cryogenic temperature; and
the apparatus is equipped to move the specimen carrier from the first storage capsule with the gripper, the apparatus is equipped to move the specimen carrier to an applicator position for applying a specimen in an aqueous suspension to the specimen carrier, the apparatus is equipped to move the specimen carrier to a blotting position where the specimen carrier is blotted, in which the blotting position may or may not differ from the applicator position, and the apparatus is equipped to place the specimen carrier in the second storage capsule.

2. The apparatus of claim 1 in which the apparatus comprises an applicator (120) for applying a liquid to the specimen carrier.

3. The apparatus according to any of the preceding claims in which the second acceptor (118) is placed in a cryogenic liquid (110), which cryogenic liquid may or may not be the cryogenic liquid in which the specimen carrier is plunged.

4. The apparatus according to any of the preceding claims in which the gripper (104) is equipped to grip a standard TEM grid with a thickness of between 15 µm and 50 µm, the TEM grid used as specimen carrier (102).

5. The apparatus of any of the preceding claims in which the apparatus is equipped with means (122) to detect the position of specimen carriers (126-i) in the first storage capsule (114).

6. The apparatus of claim 5 in which the means (122) to detect the position of specimen carriers (126-i) are used to position the gripper (104) with respect to a specimen carrier (126-i) in the first storage cassette (114) so that the specimen carrier is gripped by the gripper.

7. Method of preparing a vitrified specimen , the method comprising the steps of:
A. Supplying a specimen carrier (126-i) in a first storage capsule (114),
B. Removing the specimen carrier from the first storage capsule with a gripper (104),
C. Moving the specimen carrier to an applicator position,
D. Applying a solution of specimen material and an aqueous liquid to the specimen carrier,
E. moving the specimen carrier to the blotting position,
F. Blotting the specimen carrier with one or more blotters (106^{a}, 106^{b}),
G. Plunging the specimen carrier in a cryogenic liquid (110),
H. Placing the specimen carrier in a second storage capsule (116) at cryogenic temperature,
**Characterized in that**
Steps B. to H. are performed by an apparatus (100) equipped with a first acceptor (112) for holding the first storage capsule and a second acceptor (118) for holding the second storage capsule, and
The apparatus comprises a controller (124) for controlling the movement of the gripper, the gripper used for gripping the specimen carrier and moving the specimen carrier in steps B to H,
as a result of which the specimen on the specimen carrier is processed in a highly automated fashion, thereby eliminating errors leading to crystallization of the specimen.

8. The method of claim 7 in which during step B. detection means (122) determines the position of the specimen carrier (102) in the first storage capsule.

9. The method of claim 7 or claim 8 in which before step G more than one solutions are applied, and the time between step applying the more than one solutions and step G is such that a chemical or biochemical reaction between the more than one solutions is frozen.

10. The method of step 9 in which the sample carrier is blotted between each application of a solution.
